(19) Europäisches Patentamt
European Patent Office
Office européen des brevets

(11) **EP 3 584 447 A1**

(12) **EUROPEAN PATENT APPLICATION**
published in accordance with Art. 153(4) EPC

(43) Date of publication:
**25.12.2019 Bulletin 2019/52**

(51) Int Cl.:
**F04D 27/00** (2006.01)      **F02B 39/16** (2006.01)
**F02D 45/00** (2006.01)      **F04D 25/04** (2006.01)

(21) Application number: **18753903.6**

(22) Date of filing: **15.02.2018**

(86) International application number:
**PCT/JP2018/005220**

(87) International publication number:
**WO 2018/151201 (23.08.2018 Gazette 2018/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **16.02.2017 JP 2017026753**

(71) Applicant: **Hino Motors, Ltd.**
**Hino-shi, Tokyo 191-8660 (JP)**

(72) Inventor: **NAKANO, Hitoshi**
**Hino-shi**
**Tokyo 191-8660 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54)    **STATE QUANTITY ESTIMATING DEVICE**

(57)    This state quantity estimating device is configured to: calculate a total enthalpy, which is the energy imparted to air by an impeller, an adiabatic compression efficiency of a compressor, and a diffuser outlet flow velocity, which is the flow velocity of air at an outlet surface of a diffuser; allocate to internal energy and pressure energy, on the basis of the adiabatic compression efficiency, a value obtained by subtracting kinetic energy based on the diffuser outlet flow velocity from the total enthalpy; calculate a compression temperature, which is the temperature of air flowing into the outlet surface, by means of a calculation formula including as variables the internal energy and an inlet temperature which is the temperature of the air prior to compression by the impeller; and calculate a compression pressure, which is the pressure of air flowing into the outlet surface, by means of a calculation formula including as variables the pressure energy and an inlet pressure which is the pressure of the air prior to compression by the impeller.

Fig.6

EP 3 584 447 A1

**Description**

TECHNICAL FIELD

The present invention relates to a state quantity estimating device that estimates the state quantity of air compressed by a compressor.

BACKGROUND

An engine controller for controlling an engine calculates a control command value to a control subject based on a detection value of a sensor that detects the state quantities of running the engine. Then, the engine controller outputs the calculated control command value to the control subject. For example, the engine controller includes an intake air amount as one of the state quantities that are used to calculate a control command value to an injector that injects fuel.

The development of control logic in such an engine controller is often based on a model-based development using a state quantity estimating device that calculates estimation values of various types of state quantities of running the engine. Patent Document 1 describes such an example. The engine controller of Patent Document 1 calculates a control command value using, as a detection value of a sensor, the estimation value of each state quantity calculated by the state quantity estimating device.

PRIOR ART DOCUMENT

Patent Document

Patent Document 1: Japanese Laid-Open Patent Publication No. 11-014507

SUMMARY OF THE INVENTION

Problems that the Invention is to Solve

It is preferred that an estimation value calculated by the state quantity estimating device be highly accurate in order to enhance the accuracy of the control logic of the engine controller. Thus, the model-based development of the engine controller, which is installed in a vehicle including a compressor that compresses air drawn in by the engine, needs to have the estimation value of the state quantity of the compressed air.

It is an objective of the present invention to provide a state quantity estimating device capable of estimating a state quantity of air compressed by a compressor with high accuracy.

Means for Solving the Problem

A state quantity estimating device that solves the above-described problem estimates a state quantity of air compressed by a compressor including an impeller that compresses air and a housing that accommodates the impeller. The housing includes a diffuser into which the air compressed by the impeller flows and a scroll into which the air flows through an outlet surface of the diffuser. The state quantity estimating device is configured to calculate a total enthalpy, which is energy based on an impeller outlet flow speed, which is a flow speed of air discharged by the impeller to the diffuser, and given to the air by the impeller, an adiabatic compression efficiency of the compressor, and a diffuser outlet flow speed, which is a flow speed of air in the outlet surface of the diffuser. The state quantity estimating device is also configured to allocate, to an internal energy and a pressure energy, a value obtained by subtracting a kinetic energy based on the diffuser outlet flow speed from the total enthalpy, based on the adiabatic compression efficiency. The state quantity estimating device is further configured to calculate a compression temperature, which is a temperature of air flowing into the outlet surface, using an operational equation that includes, as variables, the internal energy and an inlet temperature, which is a temperature of air prior to being compressed by the impeller, and calculate a compression pressure, which is pressure of the air flowing into the outlet surface, using an operational equation that includes, as variables, the pressure energy and an inlet pressure, which is pressure of the air prior to being compressed by the impeller.

BRIEF DESCRIPTION OF THE DRAWINGS

Fig. 1 is a block diagram schematically showing an example of a model-based development using a state quantity estimating device according to an embodiment.

Fig. 2 is a diagram showing the schematic configuration of an engine system for which the state quantity estimating device of Fig. 1 is employed.

Fig. 3 is a cross-sectional view showing an example of the cross-sectional structure of the compressor in the engine system of Fig. 2.

Fig. 4 is a diagram schematically showing an example of the structure of the compressor in the engine system of Fig. 2.

Fig. 5 is a block diagram illustrating examples of input values and output values of the intake system model in the state quantity estimating device of Fig. 1.

Fig. 6 is a functional block diagram illustrating an example of the intake system model in the state quantity estimating device of Fig. 1.

MODES FOR CARRYING OUT THE INVENTION

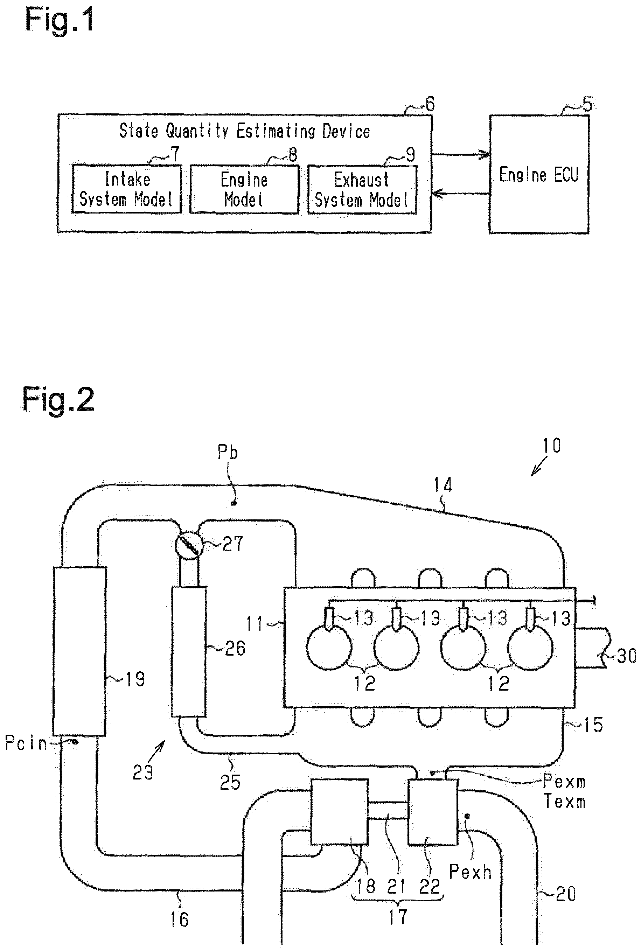

A state quantity estimating device according to an embodiment will now be described with reference to Figs. 1 to 6. First, the summary of a model-based development using the state quantity estimating device will be described with reference to Fig. 1.

Summary of Model-Based Development

Fig. 1 shows a model-based development of an engine ECU 5. The model-based development is performed using the engine ECU 5, which is subject to development, and a state quantity estimating device 6. The state quantity estimating device 6 includes various types of models capable of simulating behaviors of actual devices. The state quantity estimating device 6 performs various types of simulations in which environmental conditions, such as the external temperature and the atmospheric pressure, and control command values from the engine ECU 5 are input values in order to output values necessary for calculating control command values by the engine ECU 5, such as an intake air amount.

In the model-based development of the engine ECU 5, which is installed in a vehicle including a turbocharger, the state quantity estimating device 6 includes, for example, an intake system model 7, an engine model 8, and an exhaust system model 9. The intake system model 7 calculates various types of state quantities that indicate the states of air drawn in by the engine through the intake passage, such as a state of air compressed by a compressor, a state of air flowing into an intercooler, and a state of air drawn in by the engine. In addition to the output torque of the engine, the engine model 8 calculates state quantities indicating, for example, a state of exhaust gas discharged to the exhaust manifold. The exhaust system model 9 calculates various types of state quantities that indicate a state of exhaust gas discharged from the exhaust manifold through the exhaust passage into the ambient air, such as a state of exhaust gas flowing into the turbine and a state of exhaust gas flowing out of the turbine.

The state quantity estimating device 6 may be circuitry including 1) one or more dedicated hardware circuits such as an ASIC, 2) one or more processors running on computer programs (software), or 3) a combination of a hardware circuit and a processor. The processor includes a CPU and a memory such as a ROM or a RAM, which stores programs executed by the CPU. The memory, or computer readable medium, includes any type of medium that is accessible by a versatile computer or a dedicated computer.

Engine System

An example of an engine system including a turbocharger will now be described with reference to Fig. 2.

As shown in Fig. 2, the engine system includes an engine 10. The engine 10 includes a cylinder block 11 having cylinders 12. To each cylinder 12, an injector 13 injects fuel. An intake manifold 14 that supplies intake air to each cylinder 12 and an exhaust manifold 15 into which exhaust gas flows from each cylinder 12 are connected to the cylinder block 11.

An intake passage 16 is connected to the intake manifold 14. The intake passage 16 includes an air cleaner (not shown), a compressor 18, which is an element of a turbocharger 17, and an intercooler 19 sequentially from the upstream side. An exhaust passage 20 is connected to the exhaust manifold 15. The exhaust passage 20 includes a turbine 22 coupled to the compressor 18 by a coupling shaft 21. The turbine 22 is an element of the turbocharger 17.

The engine system includes an EGR device 23. The EGR device 23 includes an EGR passage 25 that connects the exhaust manifold 15 to the intake passage 16. The EGR passage 25 includes a water-cooled EGR cooler 26. An EGR valve 27 is arranged on a side of the EGR cooler 26 close to the intake passage 16. When the EGR valve 27 is open, some of exhaust gas is drawn into the intake passage 16 as EGR gas. That is, the cylinders 12 are supplied with the mixture of air and EGR gas as working gas when the EGR valve 27 is open, and the cylinders 12 are supplied with only air as working gas when the EGR valve 27 is closed.

In such an engine system, the cylinders 12 are supplied with, as working gas or some of working gas, air that has been compressed by the turbocharger 17 and then cooled by the intercooler 19. Further, in the cylinders 12, an air-fuel mixture is generated when fuel is injected from the injector 13, and exhaust gas is generated when the mixture burns. The exhaust gas is discharged to the exhaust manifold 15 and then flows into the exhaust passage 20. Further, the exhaust gas drives the turbine 22 and is then discharged into the ambient air.

The quantity symbols shown in Fig. 2 are defined as follows.

Pexm: turbine upstream pressure Pexm, which is the pressure of exhaust gas flowing into the turbine 22
Texm: turbine upstream temperature Texm, which is the temperature of exhaust gas flowing into the turbine 22
Pexh: turbine downstream pressure Pexh, which is the pressure of exhaust gas that has passed through the turbine 22
Pcin: intercooler inlet pressure Pcin, which is the pressure of air flowing into the intercooler 19
Pb: boost pressure Pb, which is the pressure of working gas on the downstream side of where the intake passage 16 is connected to the EGR passage 25

Compressor

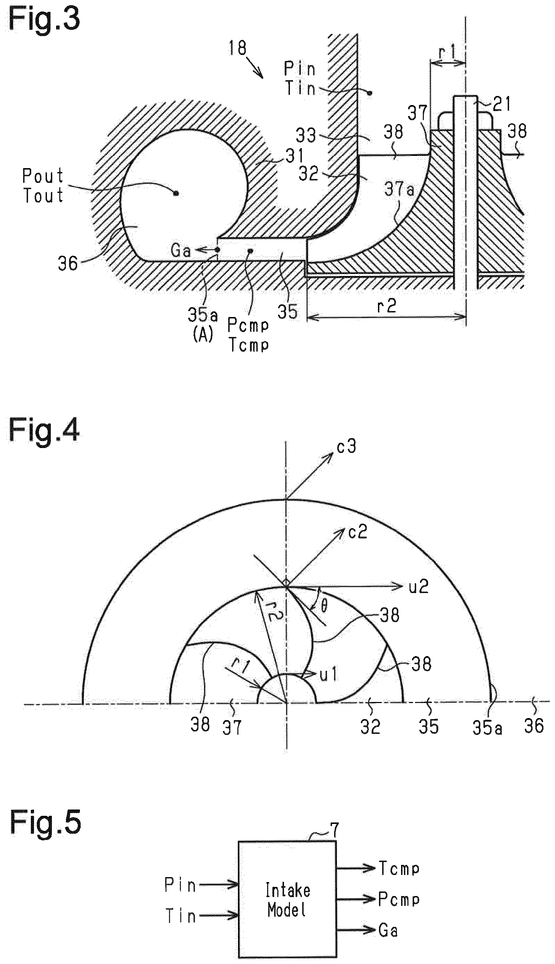

The compressor 18, which compresses air supplied to the engine 10, will now be described with reference to Figs. 3 and 4.

As shown in Figs. 3 and 4, the compressor 18 includes a housing 31 and an impeller 32 accommodated in the housing 31. The impeller 32 compresses air by rotating together with the coupling shaft 21. The housing 31 includes an inlet 33 through which air prior to being compressed by the impeller 32 flows, a diffuser 35 into which the air compressed by rotation of the impeller 32 flows, and a scroll 36 into which air flows through an outlet surface 35a of the diffuser 35. The impeller 32 includes a hub 37 that rotates together with the coupling shaft 21 and blades 38 formed integrally with the hub 37. The hub 37 has an outer circumferential surface 37a inclined toward the outer side of the impeller 32 in the radial direction. Each blade 38 has a radially inner end, which is located close to the central axis of the impeller 32 and away from the central axis by an inner diameter r1. Further, each blade 38 has a radially outer end, which is located on the opposite side from the central axis of the impeller 32 and away from the central axis by an outer diameter r2.

In the compressor 18, when rotation of the impeller 32 about the coupling shaft 21 produces energy and the energy is given to air in the inlet 33, the air is compressed to flow into the diffuser 35. Then, the air flows into the scroll 36 through the outlet surface 35a of the diffuser 35. The air that has flowed into the scroll 36 flows into the intake passage 16, which is located downstream of the compressor 18. The air then flows through the intake passage 16 toward the intercooler 19.

The quantity symbols shown in Fig. 3 are defined as follows.

Pin: inlet pressure Pin, which is the pressure of air in the inlet 33
Tin: inlet temperature Tin, which is the temperature of air in the inlet 33
Pcmp: compression pressure Pcmp, which is the pressure of air immediately prior to flowing into the outlet surface 35a
Tcmp: compression temperature Tcmp, which is the temperature of air immediately prior to flowing into the outlet surface 35a
Pout: outlet pressure Pout, which is the pressure of air in the scroll 36
Tout: outlet temperature Tout, which is the temperature of air in the scroll 36
A: effective open area A of the outlet surface 35a
Ga: intake air amount Ga, which is the mass flow rate of air passing through the outlet surface 35a per unit of time

Further, the quantity symbols shown in Fig. 4 are defined as follows.

u1: impeller inner diameter circumferential speed u1, which is the circumferential speed at the radially inner end of each blade 38
u2: impeller outer diameter circumferential speed u2, which is the circumferential speed at the radially outer end of each blade 38
θ: outlet angle θ of each blade 38
c2: impeller outlet flow speed c2, which is the flow speed of air discharged by the impeller 32
c3: diffuser outlet flow speed c3, which is the flow speed of air passing through the outlet surface 35a

Intake system model

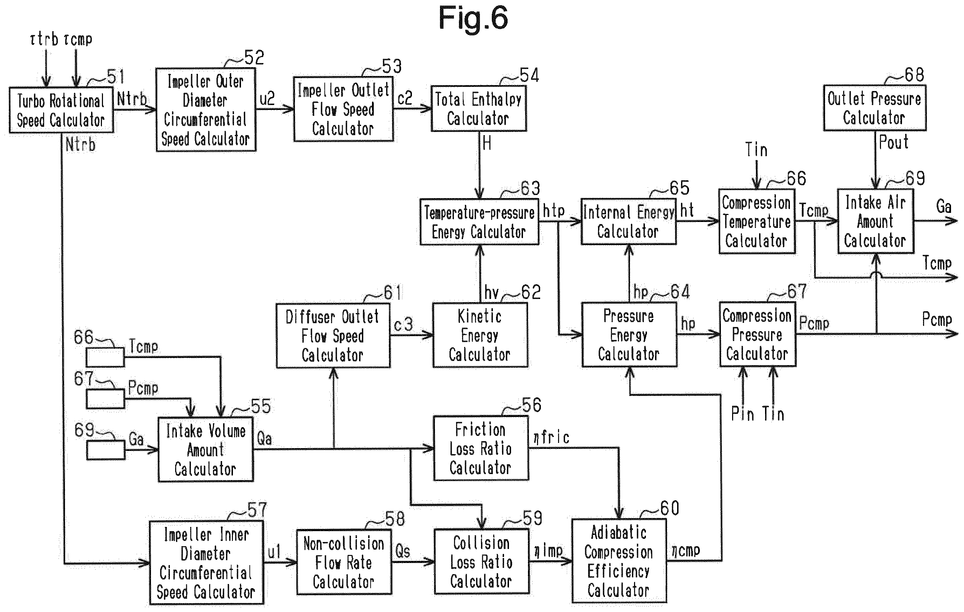

The intake system model 7, which is an element of the state quantity estimating device 6, will now be described in further detail with reference to Figs. 5 and 6.

As shown in Fig. 5, the intake system model 7 includes the inlet pressure Pin and the inlet temperature Tin as input values and includes the compression temperature Tcmp, the compression pressure Pcmp, and the intake air amount Ga as output values. Further, the intake system model 7 uses the output values of the compression temperature Tcmp, the compression pressure Pcmp, and the intake air amount Ga as previous values to calculate the subsequent compression temperature Tcmp, the subsequent compression pressure Pcmp, and the subsequent intake air amount Ga. In the intake system model 7, suitable initial values are given to the state quantities related to the calculation as needed.

As shown in Fig. 6, the intake system model 7 includes various types of functional units.

A turbo rotational speed calculator 51 calculates a turbo rotational speed Ntrb, which is the rotational speed of the coupling shaft 21, that is, the rotational speed of the impeller 32. As shown in equation (1), the turbo rotational speed calculator 51 calculates an angular acceleration $\alpha$ by dividing, by an inertia moment I of a rotor configured by the coupling shaft 21 and the impeller 32, a value obtained by subtracting a compressor driving torque $\tau$cmp from a turbine driving torque $\tau$trb. Further, the turbo rotational speed calculator 51 calculates the turbo rotational speed Ntrb based on an angular speed $\omega$, which is obtained by cumulating the angular acceleration $\alpha$.

$$\alpha = \frac{\tau_{trb} - \tau_{cmp}}{I} \quad \cdots \quad (1)$$

The compressor driving torque $\tau$cmp is calculated by dividing an output Wcmp of the compressor 18 by the previous value of the turbo rotational speed Ntrb. The output Wcmp of the compressor 18 is calculated by, for example, substituting, into equation (2), the previous value of an adiabatic compression efficiency $\eta$cmp, an air heat capacity ratio $\kappa$ of air, the inlet pressure Pin, the previous value of the compression pressure Pcmp, the previous value of the intake air amount Ga, a gas constant R, and the inlet temperature Tin. The compressor driving torque $\tau$cmp may be calculated in the intake system model 7. Alternatively, calculation values of the compressor driving torque $\tau$cmp may be obtained using other models and input to the intake system model 7.

$$W_{cmp} = \frac{1}{\eta_{cmp}} \left( \frac{\kappa}{\kappa - 1} \right) \left[ \left( \frac{P_{cmp}}{P_{in}} \right)^{\frac{\kappa-1}{\kappa}} - 1 \right] G_a R T_{in} \quad \cdots \quad (2)$$

The turbine driving torque $\tau$trb is calculated by dividing an output Wtrb of the turbine 22, which is based on a turbine efficiency $\eta$trb, by the previous value of the turbo rotational speed Ntrb. The output Wtrb of the turbine 22 is calculated by, for example, substituting, into equation (3), the turbine efficiency $\eta$trb, the heat capacity ratio $\kappa$ of exhaust gas, the turbine upstream pressure Pexm, the turbine downstream pressure Pexh, the turbine upstream temperature Texm, an exhaust gas flow rate Gexh, and the gas constant R. A value of the turbine driving torque $\tau$trb may be obtained using the exhaust system model 9 and input to the intake system model 7. Alternatively, the turbine driving torque $\tau$trb may be calculated in the intake system model 7 when necessary state quantities are input to the intake system model 7.

$$W_{trb} = \eta_{trb} \left( \frac{\kappa}{\kappa - 1} \right) \left[ \left( \frac{P_{exm}}{P_{exh}} \right)^{\frac{\kappa-1}{\kappa}} - 1 \right] G_{exh} R T_{exm} \quad \cdots \quad (3)$$

An impeller outer diameter circumferential speed calculator 52 calculates the impeller outer diameter circumferential speed u2 based on the outer diameter r2 of the impeller 32 and the angular speed $\omega$ of the impeller 32, which is based on the turbo rotational speed Ntrb.

An impeller outlet flow speed calculator 53 calculates the impeller outlet flow speed c2, which is the flow speed of air flowing from the impeller 32 into the diffuser 35. The impeller outlet flow speed calculator 53 calculates, as the impeller outlet flow speed c2, a component of the impeller outer diameter circumferential speed u2 in a direction orthogonal to the radially outer end of each blade 38 at the outlet angle $\theta$.

A total enthalpy calculator 54 calculates a total enthalpy H of air flowing into the diffuser 35. The total enthalpy H is energy given from the impeller 32 when air per unit mass flows from the inlet 33 into the diffuser 35. In detail, the total enthalpy H is the sum total of kinetic energy, internal energy, and pressure energy. The total enthalpy calculator 54 calculates the total enthalpy H using an empirical formula obtained from the results of experiments and simulations that have been conducted in advance for the compressor 18, which is a quadratic approximation in which the impeller outlet flow speed c2 is used as a variable.

An intake volume amount calculator 55 converts the previous value of the intake air amount Ga into an intake volume amount Qa, which is a volume flow rate, using the previous value of the compression pressure Pcmp and the previous value of the compression temperature Tcmp.

A friction loss ratio calculator 56 calculates a friction loss ratio ηfric, which is the ratio of post-friction energy to pre-friction energy, in relation to friction loss, which is the loss of energy resulting from friction of the impeller 32 and air that occurs when the air is compressed by the impeller 32. The friction loss ratio calculator 56 calculates the friction loss ratio ηfric using an empirical formula obtained from the results of experiments and simulations that have been conducted in advance for the compressor 18, which is a linear approximation in which the intake volume amount Qa is used as a variable.

An impeller inner diameter circumferential speed calculator 57 calculates the impeller inner diameter circumferential speed u1 based on the inner diameter r1 of the impeller 32 and the angular speed ω of the impeller 32, which is based on the turbo rotational speed Ntrb.

A non-collision flow rate calculator 58 calculates a non-collision flow rate Qs, which is the volume flow rate of air flowing into the diffuser 35 without colliding with the impeller 32 in the air compressed by the impeller 32. The non-collision flow rate calculator 58 calculates the non-collision flow rate Qs using an empirical formula obtained based on the results of experiments and simulations that have been conducted in advance for the compressor 18, which is a quadratic approximation in which the impeller inner diameter circumferential speed u1 is used as a variable.

A collision loss ratio calculator 59 calculates a collision loss ratio ηimp, which is the ratio of post-collision energy to pre-collision energy, in relation to the loss of energy resulting from collision of air with the impeller 32. The collision loss ratio calculator 59 calculates the collision loss ratio ηimp using an empirical formula obtained based on the results of experiments and simulations that have been conducted in advance for the compressor 18, which is a quadratic approximation in which the collision flow rate Qimp (Qimp = Qa - Qs) is used as a variable.

An adiabatic compression efficiency calculator 60 calculates, as the adiabatic compression efficiency ηcmp in the compressor 18, a value obtained by multiplying the friction loss ratio ηfric by the collision loss ratio ηimp.

A diffuser outlet flow speed calculator 61 calculates a diffuser outlet flow speed c3 by dividing, by the effective open area A of the outlet surface 35a, the intake volume amount Qa, which is calculated by the intake volume amount calculator 55. The effective open area A is the area of a portion of the outlet surface 35a where air passes.

A kinetic energy calculator 62 calculates a kinetic energy hv (hv = 1/2 × c3^2) of air in the outlet surface 35a of the diffuser 35 based on the diffuser outlet flow speed c3.

A temperature-pressure energy calculator 63 calculates, as a temperature-pressure energy htp, a value obtained by subtracting the kinetic energy hv from the total enthalpy H, that is, the sum of an internal energy ht and a pressure energy hp of the air in the outlet surface 35a.

A pressure energy calculator 64 calculates the pressure energy hp of air in the outlet surface 35a. The pressure energy calculator 64 calculates the pressure energy hp by substituting the heat capacity ratio κ of the air, the temperature-pressure energy htp, and the adiabatic compression efficiency ηcmp into the following equation (4).

$$h_p = \frac{\kappa \eta_{cmp} h_{tp}}{\kappa \eta_{cmp} + 1} \quad \cdots \quad (4)$$

Equation (4) is derived from the fact that the internal energy ht, the pressure energy hp, and the adiabatic compression efficiency ηcmp are generally expressed by the following equations (5), (6), and (7), respectively, in the compressor 18.

$$h_t = \frac{R}{\kappa - 1}\left(T_{cmp} - T_{in}\right) \quad \cdots \quad (5)$$

$$h_p = \frac{\kappa R}{\kappa - 1} T_{in}\left[\left(\frac{P_{cmp}}{P_{in}}\right)^{\frac{\kappa-1}{\kappa}} - 1\right] \quad \cdots \quad (6)$$

$$\eta_{cmp} = \frac{\left(\frac{P_{cmp}}{P_{in}}\right)^{\frac{\kappa-1}{\kappa}} - 1}{\frac{T_{cmp}}{T_{in}} - 1} \quad \cdots \quad (7)$$

An internal energy calculator 65 calculates the internal energy ht by subtracting the pressure energy hp from the temperature-pressure energy htp.

A compression temperature calculator 66 calculates the compression temperature Tcmp by substituting the internal energy ht, the heat capacity ratio κ of air, the gas constant R, and the inlet temperature Tin into the following equation (8), which is obtained from equation (5).

$$T_{cmp} = h_t \frac{\kappa - 1}{R} + T_{in} \quad \cdots \quad (8)$$

A compression pressure calculator 67 calculates the compression pressure Pcmp by substituting the inlet pressure Pin, the pressure energy hp, the heat capacity ratio κ of air, the gas constant R, and the inlet temperature Tin into the following equation (9), which is obtained from equation (6).

$$P_{cmp} = P_{in} \left( h_p \frac{\kappa - 1}{\kappa R T_{in}} + 1 \right)^{\frac{\kappa}{\kappa - 1}} \quad \cdots \quad (9)$$

An outlet pressure calculator 68 calculates the outlet pressure Pout, which is the pressure of air in the scroll 36. The outlet pressure calculator 68 calculates mass M of air in the intercooler 19 by cumulating the difference between an inflow amount Gcin of air that flows into the intercooler 19 and an outflow amount Gout of air that flows out of the intercooler 19. The outlet pressure calculator 68 calculates density ρ of air in the intercooler 19 by dividing the mass M by volume V of the intercooler 19 and calculates the intercooler inlet pressure Pcin at the inlet of the intercooler 19 based on the density ρ. Further, the outlet pressure calculator 68 calculates the outlet pressure Pout through mass conservation of volume elements from the scroll 36 to the intercooler 19.

An intake air amount calculator 69 calculates the intake air amount Ga, which is the mass flow rate of air passing through the outlet surface 35a. The intake air amount calculator 69 calculates the intake air amount Ga by substituting the effective open area A of the outlet surface 35a, the heat capacity ratio κ of air, the gas constant R, the compression temperature Tcmp, the compression pressure Pcmp, and the outlet pressure Pout into the following equation (10).

$$G_a = A \sqrt{\frac{2\kappa P_{cmp}^2}{(\kappa - 1)RT_{cmp}} \left[ \left( \frac{P_{out}}{P_{cmp}} \right)^{\frac{2}{\kappa}} - \left( \frac{P_{out}}{P_{cmp}} \right)^{\frac{\kappa + 1}{\kappa}} \right]} \quad \cdots \quad (10)$$

In the state quantity estimating device 6, which includes the intake system model 7 with the above-described configuration, air in the inlet 33 receives energy by an amount corresponding to the total enthalpy H from the impeller 32 until the air flows into the diffuser 35. The total enthalpy H is converted into the kinetic energy hv, the internal energy ht, and the pressure energy hp in the outlet surface 35a of the diffuser 35 based on the diffuser outlet flow speed c3 and the adiabatic compression efficiency ηcmp. Then, the compression temperature Temp is calculated based on the internal energy ht and the inlet temperature Tin. Further, the compression pressure Pcmp is calculated based on the pressure energy hp, the inlet pressure Pin, and the inlet temperature Tin. Furthermore, the intake air amount Ga, which is the mass flow rate of air passing through the outlet surface 35a, is calculated by substituting the compression temperature Temp and the compression pressure Pcmp into equation (10).

The state quantity estimating device according to the above-described embodiment has the following advantages.

(1) In the intake system model 7, energy given by the impeller 32 is converted into various types of energy. More specifically, the energy given by the impeller 32 to air in the inlet 33 having the inlet temperature Tin and the inlet pressure Pin is set as the total enthalpy H, and the total enthalpy H is converted into the kinetic energy hv, the internal energy ht, and the pressure energy hp. Then, the compression temperature Tcmp and the compression pressure Pcmp are calculated based on the values of the converted energy. This enhances the accuracy of the calculation results of the compression temperature Tcmp and the compression pressure Pcmp. Further, calculating the intake air amount Ga using the compression temperature Tcmp and the compression pressure Pcmp enhances the accuracy of the intake air amount Ga.

There is a familiar method for calculating the intake air amount Ga and the compression temperature Tcmp using maps obtained from the results of experiments and simulations conducted in advance for the compressor 18. In such a calculation method, the intake air amount Ga is calculated using, for example, a map in which the turbo rotational speed Ntrb and a compression ratio πcmp(πcmp = Pout/Pin) in the compressor 18 are used as variables. Further, the compression temperature Tcmp is calculated using, for example, the adiabatic compression efficiency ηcmp, which is obtained from a map in which the compression ratio πcmp and the intake air amount Ga are used as variables. However, in such a calculation method, the intake air amount Ga and the compression temperature Tcmp are unambiguously calculated in accordance with different states. Thus, interaction of the intake air amount Ga and the compression temperature Tcmp is not sufficiently taken into account. Accordingly, reproducibility may be low in the vicinity of the inflection point of each state quantity such as the turbo rotational speed Ntrb, thereby lowering the accuracy of the calculation result. Further, since two maps are used to represent the characteristics of one compressor, modification of one of the maps for system identification may not be reflected on the other one of the maps. As a result, modification may be performed differently from an actual device.

In the above-described configuration, the total enthalpy H is calculated based on the previous value of each state quantity, and the total enthalpy H is converted into the kinetic energy hv, the internal energy ht, and the pressure energy hp. That is, the intake air amount Ga, the compression pressure Pcmp, and the compression temperature Tcmp at a point in time are calculated taking into account various state quantities at the previous point in time such as the turbo rotational speed Ntrb, the intake air amount Ga, the compression pressure Pcmp, and the compression temperature Tcmp. Thus, since the previous values and interaction of the state quantities are taken into account, the calculation results of the intake air amount Ga, the compression pressure Pcmp, and the compression temperature Tcmp improve reproducibility in the vicinity of the inflection point of each state quantity. This enhances the accuracy of the calculation result of each state quantity.

(2) In the intake system model 7, the adiabatic compression efficiency ηcmp is calculated by multiplying the friction loss ratio ηfric by the collision loss ratio ηimp. The friction loss ratio ηfric is calculated using a linear equation that includes, as a variable, the intake volume amount Qa, into which the previous value of the intake air amount Ga has been converted using the previous value of the compression temperature Tcmp and the previous value of the compression pressure Pcmp. Further, the collision loss ratio ηimp is calculated using a quadratic equation that includes, as a variable, the collision flow rate Qimp, which is obtained by subtracting the non-collision flow rate Qs from the intake volume amount Qa. The non-collision flow rate Qs is calculated using a quadratic equation that includes, as a variable, the impeller inner diameter circumferential speed u1 based on the turbo rotational speed Ntrb. Such a configuration reduces the load on the state quantity estimating device 6 in relation to the calculation of the friction loss ratio ηfric and the collision loss ratio ηimp. This increases the speed of calculating the compression temperature Tcmp, the compression pressure Pcmp, and the intake air amount Ga. In addition, the friction loss ratio ηfric and the collision loss ratio ηimp are calculated independently from each other. Thus, when the model of calculating the adiabatic compression efficiency ηcmp is formulated, adjustment can be easily performed.

(3) In the intake system model 7, the diffuser outlet flow speed c3 is calculated by dividing the intake volume amount Qa by the effective open area A. This configuration reduces the load on the state quantity estimating device 6 in relation to the calculation of the diffuser outlet flow speed c3.

(4) In the intake system model 7, the impeller outlet flow speed c2 is calculated based on the outer diameter r2 of the impeller 32, the outlet angle θ of each blade 38, and the angular speed ω of the impeller 32, which is based on the turbo rotational speed Ntrb. This configuration reduces the load on the state quantity estimating device 6 in relation to the calculation of the impeller outlet flow speed c2.

The above-described embodiment may be modified as follows.

The impeller outlet flow speed c2 may be calculated in the following manner. That is, for example, a gradient of the impeller outlet flow speed corresponding to the turbo rotational speed Ntrb is set between the radially outer ends of two blades 38. Further, the impeller outlet flow speed at the radially outer end of one of the two blades 38 is set to the impeller outlet flow speed c2 of the above-described embodiment, and the impeller outlet flow speed of the radially outer end of the other one of the two blades 38 is set to zero. In such a condition, a velocity distribution between the two blades 38 may be obtained so that the average value calculated from the velocity distribution is set to the impeller outlet flow speed c2.

The diffuser outlet flow speed c3 does not have to be calculated by dividing the intake volume amount Qa, into which the previous value of the intake air amount Ga has been converted, by the effective open area A. Instead, the diffuser outlet flow speed c3 may be calculated using other methods.

The adiabatic compression efficiency ηcmp may be calculated by substituting the previous value of the compression pressure Pcmp and the previous value of the compression temperature Tcmp into equation (7). Alternatively, the adiabatic compression efficiency ηcmp may be the average value of the calculation result of the adiabatic compression efficiency calculator 60 and the calculation result of equation (7).

The internal energy calculator 65 does not have to calculate the internal energy ht by subtracting the pressure energy hp from the temperature-pressure energy htp. Instead, the internal energy calculator 65 may calculate the internal energy ht based on the temperature-pressure energy htp and the adiabatic compression efficiency ηcmp.

The state quantity estimating device 6 simply needs to include the intake system model 7, which estimates the state quantity of air compressed by the compressor 18, and does not have to include the engine model 8 or the like.

The state quantity estimating device 6 does not have to obtain the turbo rotational speed Ntrb based on the angular speed ω, which is obtained by cumulating the angular acceleration α, which is calculated from the compressor driving torque τcmp, the turbine driving torque τtrb, and the inertia moment I. Instead, when installed in a vehicle, the state quantity estimating device 6 may obtain the turbo rotational speed Ntrb based on, for example, a detection value of a sensor that detects the rotational speed of the coupling shaft 21.

The state quantity estimating device 6 does not have to obtain the outlet pressure Pout based on the intercooler inlet pressure Pcin. Instead, when installed in a vehicle, the state quantity estimating device 6 may obtain the outlet pressure Pout based on, for example, a detection value of a sensor that detects the outlet pressure Pout.

When installed in a vehicle, the state quantity estimating device 6, which calculates the compression temperature Tcmp and the intake air amount Ga, may be used for on-board diagnostics (OBD) for a boost pressure sensor that detects the boost pressure Pb. An estimation value of the boost pressure Pb may be calculated as follows.

For example, the state quantity estimating device 6 calculates an EGR gas inflow amount, which is the flow rate of EGR gas flowing into the intake passage 16, and an EGR gas inflow temperature, which is the temperature of EGR gas flowing into the intake passage 16, in addition to the intake air amount Ga and the compression temperature Tcmp. Further, the state quantity estimating device 6 calculates a working gas amount, which is the flow rate of working gas, and a working gas temperature, which is the temperature of working gas. The state quantity estimating device 6 can calculate an estimation value of the boost pressure Pb by integrating, by mass and energy, the intake air amount Ga, the compression temperature Tcmp, the EGR gas inflow amount, the EGR gas inflow temperature, the working gas amount, and the working gas temperature.

**Claims**

1. A state quantity estimating device that estimates a state quantity of air compressed by a compressor comprising an impeller that compresses air and a housing that accommodates the impeller, the housing including a diffuser into which the air compressed by the impeller flows and a scroll into which the air flows through an outlet surface of the diffuser, wherein the state quantity estimating device is configured to:

   calculate a total enthalpy, which is energy based on an impeller outlet flow speed, which is a flow speed of air discharged by the impeller to the diffuser, and given to the air by the impeller, an adiabatic compression efficiency of the compressor, and a diffuser outlet flow speed, which is a flow speed of air in the outlet surface of the diffuser;
   allocate, to an internal energy and a pressure energy, a value obtained by subtracting a kinetic energy based on the diffuser outlet flow speed from the total enthalpy, based on the adiabatic compression efficiency; and
   calculate a compression temperature, which is a temperature of air flowing into the outlet surface, using an operational equation that includes, as variables, the internal energy and an inlet temperature, which is a temperature of air prior to being compressed by the impeller, and calculate a compression pressure, which is pressure of the air flowing into the outlet surface, using an operational equation that includes, as variables, the pressure energy and an inlet pressure, which is pressure of the air prior to being compressed by the impeller.

2. The state quantity estimating device according to claim 1, wherein the state quantity estimating device is configured to:

   calculate an outlet pressure, which is pressure of air in the scroll; and
   calculate an intake air amount, which is a mass flow rate of air passing through the outlet surface, using an operational equation that includes the compression pressure, the compression temperature, and the outlet pressure as variables.

3. The state quantity estimating device according to claim 2, wherein the state quantity estimating device is configured to:

   convert a previous value of the intake air amount into an intake volume amount, which is a volume flow rate, using a previous value of the compression temperature and a previous value of the compression pressure;
   calculate a friction loss ratio, which results from friction between the impeller and air, based on the intake volume amount and calculate a collision loss ratio, which results from collision of air with the impeller, based on a collision flow rate obtained by subtracting a non-collision flow rate, which is a volume flow rate of air flowing into the diffuser without colliding with the impeller, from the intake volume amount; and

calculate the adiabatic compression efficiency by multiplying the friction loss ratio by the collision loss ratio.

4.  The state quantity estimating device according to claim 2 or 3, wherein the state quantity estimating device is configured to:

convert a previous value of the intake air amount into an intake volume amount, which is a volume flow rate, using a previous value of the compression temperature and a previous value of the compression pressure; and calculate the diffuser outlet flow speed by dividing the intake volume amount by an effective open area of the outlet surface.

5.  The state quantity estimating device according to any one of claims 1 to 4, wherein the state quantity estimating device is configured to:

calculate an impeller outlet circumferential speed, which is a circumferential speed at an radially outer end of a blade of the impeller, based on a rotational speed of the impeller and an outer diameter of the impeller; and calculate, as the impeller outlet flow speed, a component of the impeller outlet circumferential speed in a direction orthogonal to an radially outer end of the blade based on an outlet angle at the radially outer end of the blade.

# Fig.1

# Fig.2

EP 3 584 447 A1

Fig.3

18
Pin
Tin

Pout
Tout

36

35a
(A)
Pcmp
Tcmp

33
31
32

35

38
37

37a

r1

21
38

r2

Fig.4

c3

c2

u2

θ

r2

38

38

r1
u1

38  37

32    35    35a    36

Fig.5

7

Pin
Tin

Intake
Model

Tcmp
Pcmp
Ga

12

# Fig.6

τtrb τcmp

| 51 Turbo Rotational Speed Calculator | Ntrb → | 52 Impeller Outer Diameter Circumferential Speed Calculator | u2 → | 53 Impeller Outlet Flow Speed Calculator | c2 → | 54 Total Enthalpy Calculator |

Ntrb

68 Outlet Pressure Calculator
Pout

Tin

H

63 Temperature-pressure Energy Calculator → htp → 65 Internal Energy Calculator → ht → 66 Compression Temperature Calculator → Tcmp → 69 Intake Air Amount Calculator → Ga

Tcmp

hv 62

61 Diffuser Outlet Flow Speed Calculator → c3 → 62 Kinetic Energy Calculator

hp 64

64 Pressure Energy Calculator → hp → 67 Compression Pressure Calculator → Pcmp

Pcmp

66 Tcmp

67 Pcmp

69 Ga

55 Intake Volume Amount Calculator → Qa

56 Friction Loss Ratio Calculator → ηfric

Pin Tin

57 Impeller Inner Diameter Circumferential Speed Calculator → u1 → 58 Non-collision Flow Rate Calculator → Qs → 59 Collision Loss Ratio Calculator → ηimp → 60 Adiabatic Compression Efficiency Calculator → ηcmp

EP 3 584 447 A1

13

**INTERNATIONAL SEARCH REPORT**

| International application No. |
| --- |
| PCT/JP2018/005220 |

### A. CLASSIFICATION OF SUBJECT MATTER

Int.Cl. F04D27/00(2006.01)i, F02B39/16(2006.01)i, F02D45/00(2006.01)i, F04D25/04(2006.01)i

According to International Patent Classification (IPC) or to both national classification and IPC

### B. FIELDS SEARCHED

Minimum documentation searched (classification system followed by classification symbols)
Int.Cl. F04D27/00, F02B39/16, F02D45/00, F04D25/04

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2009-7934 A (HITACHI, LTD.) 15 January 2009, paragraphs [0027]-[0030], [0054], [0055], fig. 13 & US 2009/0007564 A1, paragraphs [0047]-[0049], [0073], [0074], fig. 13 & EP 2009264 A2 | 1-5 |
| A | JP 2007-321687 A (DENSO CORPORATION) 13 December 2007, paragraph [0038], fig. 1, 4 & DE 102007000300 A1 | 1-5 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 02.05.2018 | 15.05.2018 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

**Patent documents cited in the description**

- JP 11014507 A